# EUROPÄISCHE PATENTSCHRIFT

(11) **EP 3 164 298 B1**
(45) Veröffentlichungstag und Bekanntmachung des Hinweises auf die Patenterteilung: **23.10.2019**
(21) Anmeldenummer: 15722696.0
(22) Anmeldetag: 07.05.2015
(51) Int. Cl.: B60R 13/02, B60H 1/34

(54) **BLENDE FÜR EINEN FAHRZEUGINNENRAUM SOWIE LÜFTUNGSANORDNUNG FÜR EIN KRAFTFAHRZEUG**
PANEL FOR A VEHICLE INTERIOR AND VENTILATION ARRANGEMENT FOR A MOTOR VEHICLE
PARE-SOLEIL POUR HABITACLE DE VÉHICULE ET DISPOSITIF DE VENTILATION POUR VÉHICULE AUTOMOBILE

(30) Priorität: 03.07.2014 DE 102014212978; 01.10.2014 DE 102014219902
(43) Veröffentlichungstag der Anmeldung: 10.05.2017
(73) Patentinhaber: Volkswagen Aktiengesellschaft, 38440 Wolfsburg (DE)
(72) Erfinder: ROTTMANN, Johannes, 38376 Süpplingenburg (DE); TIETZ, Volker, 38446 Wolfsburg (DE)
(86) Internationale Anmeldenummer: PCT/EP2015/060077
(87) Internationale Veröffentlichungsnummer: WO 2016/000855

(56) Entgegenhaltungen:
- CN-Y- 201 354 035
- DE-U1-202009 004 224
- US-A- 3 377 144
- US-A1- 2001 014 583
- US-A1- 2011 181 066

## Beschreibung

Die Erfindung betrifft eine Blende für einen Fahrzeuginnenraum, mit mehreren Lamellen, die an einem Tragteil der Blende befestigt sind. Die Erfindung betrifft weiterhin eine Lüftungsanordnung für ein Kraftfahrzeug.

Die Blende wird üblicherweise in dem Fahrzeuginnenraum angeordnet und wird dort beispielsweise zur Verkleidung eines Strukturelements des Kraftfahrzeugs herangezogen. Insoweit dient die Blende dazu, einen optischen Eindruck und die Wertigkeit des Fahrzeuginnenraums zu verbessern. Die Blende kann insoweit auch als Zierblende oder als Zierteil bezeichnet werden.

Die Blende kann Bestandteil der Lüftungsanordnung sein, welche über wenigstens einen Lüftungsauslass verfügt. Der Lüftungsauslass dient dazu, Luft, beispielsweise Frischluft und/oder aus dem Fahrzeuginnenraum entnommene Luft, mithin also Umluft, in den Fahrzeuginnenraum einzubringen. Der Lüftungsauslass weist vorzugsweise wenigstens eine Lüftungslamelle, vorzugsweise mehrere Lüftungslamellen auf, welche beispielsweise verlagerbar, insbesondere schwenkbar sind, um die Strömungsrichtung der durch den Lüftungseinlass in den Fahrzeuginnenraum einströmenden Luft zu beeinflussen. Je nach Stellung der Lamellen strömt also die Luft mit unterschiedlichen Strömungsvektoren in den Fahrzeuginnenraum ein.

Die Blende ist nun insbesondere dazu vorgesehen, den Lüftungsauslass zu kaschieren und optisch ansprechend in den Fahrzeuginnenraum einzubinden. Dabei soll vorzugsweise die Optik des Lüftungsauslasses fortgesetzt beziehungsweise nachempfunden werden. Zu diesem Zweck weist die Blende die mehreren Lamellen auf, wobei beispielsweise jeder Lüftungslamelle genau eine oder wenigstens eine Lamelle der Blende zugeordnet ist. Diese Lamelle ist derart angeordnet, dass sie eine optische Verlängerung der jeweils zugeordneten Lüftungslamelle darstellt. Beispielsweise verfügt die Blende über ebenso viele Lamellen wie die Lüftungsanordnung über Lüftungslamellen. Während die Lüftungslamellen, wie bereits erläutert, verlagerbar sein können, sind die Lamellen der Blende vorzugsweise starr befestigt.

Sowohl die Lamellen der Blende als auch die Lüftungslamellen des Lüftungsauslasses sind bevorzugt wenigstens bereichsweise parallel zueinander angeordnet, wobei die von den Lamellen aufgespannten Ebenen einander nicht schneiden beziehungsweise parallel zueinander angeordnet sind. Dies muss jedoch nicht notwendigerweise der Fall sein, so dass in einer alternativen Ausführungsform von den Lamellen aufgespannte Ebenen einander unter einem bestimmten Winkel schneiden können.

Die Lamellen der Blende sind an dem Tragteil befestigt, wobei das Tragteil beispielsweise dem Strukturelement des Kraftfahrzeugs entsprechen kann oder an diesem befestigt ist. Die Lamellen erstrecken sich ausgehend von dem Tragteil in Richtung des Fahrzeuginnenraums, wobei ihre dem Fahrzeuginnenraum zugewandte Seite beziehungsweise die dem Tragteil abgewandte Seite als freies Ende vorliegt. Bei einfachen Ausgestaltungen der Blende, bei welchen sich die Lamellen ausgehend von dem Tragteil in Richtung des Fahrzeuginnenraums erstrecken, können jedoch störende Lichtreflexe entstehen, wenn aus dem Fahrzeuginnenraum kommendes Licht von den Lamellen und/oder dem Tragteil reflektiert wird. Dieses reflektierte Licht kann zu einem Betrachter, beispielsweise einem Fahrer des Kraftfahrzeugs, zurückgeworfen werden und insoweit störende Glanzlichter an der Blende hervorrufen.

Aus dem Stand der Technik ist beispielsweise die Druckschrift DE 196 54 416 C1 bekannt. Diese beschreibt eine Blende für den Innenraum eines Fahrzeugs, mit einer rasterartigen Oberfläche, die in zumindest einem Teilbereich mit Durchlässen versehen ist, wobei die Blende in eine Innenraumverkleidung oder eine Instrumententafel einsetzbar ist und wobei der Teilbereich mit Durchlässen eine Öffnung einer in oder hinter der Innenraumverkleidung oder der Instrumententafel verlaufenden Luftleitung verdeckt. Um den Materialeinsatz zu vermindern und die Montage zu vereinfachen soll zumindest ein weiterer Teilbereich der rasterartigen Oberfläche mit Durchlässen versehen sein, der ein in einer Ausnehmung der Innenraumverkleidung oder der Instrumententafel angeordnetes Schallelement verdeckt.

Ferner offenbart die US 3 377 144 A einen Lautsprechergrill. Die CN 201 354 035 Y zeigt eine Gitterstruktur für ein Innendekorteil eines Kraftfahrzeugs. In der US 2001/014583 A1 sind ein Verfahren und eine Vorrichtung zur Vermeidung von Reflexionen und Kontrasten an Fahrzeuginstrumententafeln beschrieben. Die US 2011/181066 A1 schlägt ein einstückiges Abdeckelement zum Abdecken eines luftführenden Kanals an einer Instrumententafel eines Kraftfahrzeugs vor.

Die DE 20 2009 004 224 U1 beschreibt eine Abdeckung aus einem Kunststoffmaterial, mit einem ersten, eine Gitterstruktur umfassenden Bereich, bei dem die Gitterstruktur durch Rippen ausgebildet ist, welche Perforationslöcher begrenzt und mit zumindest einem zweiten, eine Blindlochstruktur aufweisenden Bereich, bei dem die Blindlochstruktur durch zumindest eine Vertiefung mit einem Lochgrund als Blindloch ausgebildet ist. Zumindest der Lochgrund des Blindloches weist eine Kontur und/oder Oberflächenstruktur auf, der die in das Blindloch einfallenden Lichtstrahlen bricht und diffus reflektiert.

Es ist Aufgabe der Erfindung, eine Blende für einen Fahrzeuginnenraum vorzuschlagen, welche gegenüber dem Stand der Technik Vorteile aufweist, insbesondere das Auftreten von Reflektionen beziehungsweise Glanzlichtern auf der Blende verringert oder sogar gänzlich verhindert.

Dies wird erfindungsgemäß mit einer Blende mit den Merkmalen des Anspruchs 1 erreicht. Dabei ist vorgesehen, dass wenigstens eine der Lamellen auf einer dem Tragteil zugewandten Seite von einer Lichtabsorptionskammer zumindest bereichsweise hintergriffen ist. Unter der dem Tragteil zugewandten Seite wird vorzugsweise - im Querschnitt gesehen - eine dem Fahrzeuginnenraum abgewandte Seite beziehungsweise ein dem Fahrzeuginnenraum abgewandtes Ende der jeweiligen Lamelle verstanden. Auf der genannten Seite weist die Lamelle eine Stirnseite auf. Die Lichtabsorptionskammer kann unmittelbar benachbart zu der Stirnseite angeordnet sein, sodass also die Lamelle beziehungsweise ihre Stirnseite die Lichtabsorptionskammer zumindest teilweise begrenzt. Es kann jedoch auch vorgesehen sein, dass die Lichtabsorptionskammer von der Lamelle beziehungsweise deren Stirnseite beabstandet vorliegt, wobei dies insbesondere auf der dem Fahrzeuginnenraum abgewandten Seite der Fall ist. Anders ausgedrückt ist erfindungsgemäß vorgesehen, dass eine dem Tragteil zugewandte Stirnseite wenigstens einer der Lamellen von einer Lichtabsorptionskammer zumindest bereichsweise hintergriffen ist

Die Blende beziehungsweise die Lamellen sind derart ausgestaltet, dass ein Großteil der zwischen die Lamellen gerichteten Lichtstrahlen in Richtung der Lichtabsorptionskammer beziehungsweise in diese hinein reflektiert werden. Die Lichtabsorptionskammer ist dabei derart geformt, dass die Lichtstrahlen zumindest nicht unmittelbar wieder aus ihr heraus beziehungsweise an den Lamellen vorbei gelangen können. Die Lichtabsorptionskammer dient insoweit als Lichtfalle, sodass die vorstehend erwähnten Glanzlichter auf den Lamellen und/oder dem Tragteil vermieden werden. Die Form der Lichtabsorptionskammer ist beispielsweise derart gewählt, dass durch einen Zwischenraum zwischen unmittelbar benachbarten Lamellen einfallendes Licht, welches in die Lichtabsorptionskammer eintritt und dort an einer Begrenzung der Lichtabsorptionskammer reflektiert wird, zumindest ein weiteres Mal auf die Begrenzung auftrifft. Weil die Intensität des Lichts mit jeder Reflektion abnimmt, ist die Intensität des anschließend unter Umständen aus der Lichtabsorptionskammer austretenden Lichts, welches als Restlicht bezeichnet werden kann, derart niedrig, dass es einem Betrachter nicht oder zumindest nicht störend auffällt.

Die Lichtabsorptionskammer ist im Querschnitt gesehen vorzugsweise auf der dem Fahrzeuginnenraum abgewandten Seite der Lamelle ausgebildet. Insbesondere liegt sie zwischen der Lamelle beziehungsweise deren Stirnseite und dem Tragteil vor, beispielsweise wird sie von diesen gemeinsam ausgebildet. Es ist also nicht der Fall, dass die Stirnseiten der Lamellen auf kürzestem Wege miteinander verbunden sind, um die Lamellen an dem Tragteil zu halten. Vielmehr ist die Stirnseite der wenigstens einen Lamelle vorzugsweise zur Ausbildung der Lichtabsorptionskammer von dem Tragteil beabstandet angeordnet.

Die Lichtabsorptionskammer weist im Querschnitt gesehen eine Mündungsöffnung auf, welche insbesondere zwischen einem Verbindungselement einerseits sowie der Lamelle beziehungsweise der dem Verbindungselement zugewandten Stirnseite der Lamelle andererseits vorliegt. Über das Verbindungselement ist die Lamelle mit einer unmittelbar benachbarten Lamelle verbunden. Das Verbindungselement kann die Lichtabsorptionskammer wenigstens bereichsweise begrenzen, insbesondere liegt die Lichtabsorptionskammer - im Querschnitt gesehen - zwischen dem Verbindungselement und der Lamelle. Vorzugsweise liegt die Mündungsöffnung im Wesentlichen in derselben Ebene wie die Lamelle. Die Lichtabsorptionskammer ist insoweit im Querschnitt beispielsweise U-förmig, wobei die Mündungsöffnung zwischen Schenkeln der Lichtabsorptionskammer eingeschlossen ist. Die Mündungsöffnung liegt vorzugsweise in einer Ebene, in welcher auch eine Oberseite, insbesondere eine ebene Oberseite, der von der Lichtabsorptionskammer hintergriffenen Lamelle liegt.

Die Tiefe der Lichtabsorptionskammer entspricht - im Querschnitt gesehen - vorzugsweise mindestens 25 %, mindestens 50 %, mindestens 75 % oder mindestens 100 % des minimalen Abstands zwischen unmittelbar benachbarten Lamellen, zwischen welchen die Lichtabsorptionskammer einmündet. Die Tiefe der Lichtabsorptionskammer entspricht dabei vorzugsweise dem Abstand zwischen der Mündungsöffnung und einem tiefsten Grund der Lichtabsorptionskammer, insbesondere dem Abstand zwischen der Mündungsöffnung und dem am weitesten von der Mündungsöffnung beabstandeten Punkt der Lichtabsorptionskammer.

Die Breite der Lichtabsorptionskammer beträgt beispielsweise mindestens 5 %, mindestens 10 %, mindestens 15 %, mindestens 20 %, mindestens 25 % oder mindestens 50 % der Länge derjenigen Lamelle, der sie zugeordnet ist beziehungsweise die sie hintergreift. Die Breite der Lichtabsorptionskammer ist beispielsweise die Breite der Mündungsöffnung im Querschnitt gesehen, also der Abstand zwischen der von der Lichtabsorptionskammer hintergriffenen Lamelle und dem Verbindungselement. Anders ausgedrückt kann die Breite der Lichtabsorptionskammer dem minimalen Abstand zwischen der hintergriffenen Lamelle und dem Verbindungselement entsprechen.

Zur Verbesserung der Wirkung der Blende beziehungsweise der Lichtsabsorptionskammer kann die Begrenzung der Lichtabsorptionskammer beziehungsweise eine diese Begrenzung ausbildende Wand mattiert sein, um die Intensität des auftreffenden Lichts möglichst rasch zu verringern. Weil jedoch bereits die Lichtsabsorptionskammer eine solche Verringerung mit hoher Effizient vornimmt, kann die Begrenzung beziehungsweise Wand auch zumindest bereichsweise, insbesondere vollständig, unmattiert, beispielsweise also glatt, ausgeführt sein.

In einer weiteren Ausgestaltung der Erfindung ist vorgesehen, dass die Lichtabsorptionskammer von einem von benachbarten Lamellen begrenzten Zwischenraum ausgeht. Im Querschnitt gesehen begrenzen benachbarte Lamellen, insbesondere unmittelbar benachbarte Lamellen den Zwischenraum beziehungsweise schließen diesen zwischen sich ein. Der Zwischenraum mündet nun in die Lichtabsorptionskammer ein. Selbstverständlich kann auch davon gesprochen werden, dass die Lichtabsorptionskammer einen Bereich des Zwischenraums darstellt beziehungsweise der Zwischenraum einen Bereich der Lichtabsorptionskammer bildet. Im Querschnitt gesehen ist die Lichtabsorptionskammer taschenförmig beziehungsweise sackartig ausgebildet. Sie ist mithin auf ihren dem Zwischenraum abgewandten Seiten geschlossen.

In einer bevorzugten Ausgestaltung der Erfindung ist vorgesehen, dass die benachbarten Lamellen übereinander angeordnet sind und die Lichtabsorptionskammer eine untere und/oder eine obere der Lamellen hintergreift. Unter den benachbarten Lamellen sind besonders bevorzugt unmittelbar benachbarte Lamellen zu verstehen. Zwischen diesen Lamellen liegt also keine weitere Lamelle vor. Die benachbarten Lamellen sind übereinander angeordnet und schließen dabei den vorstehend erwähnten Zwischenraum zwischen sich ein. Es kann nun vorgesehen sein, dass die Lichtabsorptionskammer entweder die untere oder die obere der Lamellen hintergreift, während die jeweils andere der Lamellen nicht hintergriffen ist und beispielsweise unmittelbar an dem Tragteil anliegt. Selbstverständlich kann es jedoch auch vorgesehen sein, dass die Lichtabsorptionskammer sowohl die untere und die obere der Lamellen hintergreift. In diesem Fall kann auch davon gesprochen werden, dass von dem Zwischenraum zwei Lichtabsorptionskammern ausgehen.

In einer weiteren Ausgestaltung der Erfindung ist vorgesehen, dass wenigstens eine der Lamellen an einem Lamellenelement vorliegt, das ein bezüglich der Lamelle angewinkeltes Halteelement aufweist. Im Querschnitt bezüglich einer Längserstreckung der Lamellen soll also zwischen der Lamelle und dem ihr zugeordneten Halteelement ein Winkel vorliegen, welcher von 0° beziehungsweise 180° verschieden ist. Vorzugsweise schließt sich das Halteelement unmittelbar an die Lamelle an beziehungsweise ist an dieser befestigt. In einer besonders bevorzugten Ausgestaltung ist das Lamellenelement einstückig ausgebildet, sodass insoweit die Lamelle und das Halteelement einstückig und/oder materialeinheitlich ausgeführt sind. Mittels des Halteelements wird beispielsweise eine Befestigung der ihm zugeordneten Lamelle realisiert.

In einer weiteren Ausgestaltung der Erfindung ist vorgesehen, dass wenigstens eine der Lamellen an ihrem dem Tragteil abgewandten Ende einen Lamellenkopf aufweist, der durch eine Abstufung der Lamelle ausgebildet ist. Vorzugsweise verfügt jede der Lamellen über einen solchen Lamellenkopf. Der Lamellenkopf liegt an dem, dem Tragteil abgewandten Ende beziehungsweise dem, dem Fahrzeuginnenraum zugewandten Ende der jeweiligen Lamelle vor. Der Lamellenkopf ist durch eine Abstufung der Lamelle ausgebildet, wobei unter der Abstufung beispielsweise ein Rücksprung oder eine Ausklinkung zu verstehen ist, sodass in der Lamelle eine Stufe vorliegt, womit der Lamellenkopf im Querschnitt gesehen größere Abmessungen aufweist als die weiteren Bereiche der Lamelle, welche auf der dem Lamellenkopf abgewandten Seite der Abstufung vorliegen. Der Lamellenkopf dient insbesondere der optischen Verbesserung der Lamelle und ist insoweit als Zierelement ausgeführt.

Beispielsweise ist der Lamellenkopf wenigstens bereichsweise aus einem Material ausgeführt, welches von dem Material weiterer Bereiche der Lamelle verschieden ist. Es kann auch vorgesehen sein, dass an dem Lamellenkopf ein Anbauteil, insbesondere ein Aufsteckteil angeordnet beziehungsweise befestigt ist. Beispielsweise weist der die Lamelle an ihrem Lamellenkopf dazu einen Haltevorsprung auf, auf welchen das Zierteil aufgesteckt oder aufgepresst wird. In letzterem Fall ist das Zierteil kraftschlüssig an der Lamelle gehalten. Selbstverständlich kann die Befestigung der Zierteils an der Lamelle beliebig ausgestaltet sein, beispielsweise formschlüssig, kraftschlüssig und/oder stoffschlüssig. Das Zierteil kann aus demselben Material bestehen wie die Lamelle. Vorzugsweise ist er jedoch aus einem anderen Material. Beispielsweise besteht die Lamelle aus Kunststoff, während das Zierteil aus Metall besteht oder zumindest eine Metalloptik aufweist.

In einer besonders bevorzugten Ausführungsform der Erfindung ist vorgesehen, dass an dem Lamellenkopf, insbesondere der Abstufung, ein Verbindungselement des Tragteils befestigt ist. Dabei liegt das Verbindungselement des Tragteils besonders bevorzugt an dem Lamellenkopf beziehungsweise der Abstufung an. Die Lamelle ist insoweit vorzugsweise an zwei Stellen an dem Tragteil befestigt, nämlich zum einen über das Halteelement und zum anderen über das Verbindungselement. Das Verbindungselement liegt vorzugsweise zwischen zwei benachbarten beziehungsweise unmittelbar benachbarten Lamellen beziehungsweise Lamellenelementen vor und verbindet diese miteinander. Ganz außenliegende Lamellen, also beispielsweise ganz oben oder ganz unten in der Blende angeordnete Lamellen können auf andere Art und Weise an dem Tragteil befestigt sein, wozu dieses vorzugsweise ein dem Verbindungselement zumindest ähnliches Element aufweist.

Eine Weiterbildung der Erfindung sieht vor, dass das Verbindungselement an seinem dem Lamellenkopf abgewandten Ende an dem Halteelement befestigt ist. Wie bereits vorstehend erläutert, ist das Verbindungselement an dem Lamellenkopf befestigt und liegt dabei vorzugsweise an diesem an. An dem im Querschnitt gesehen anderen Ende, also dem Ende, welches dem Lamellenkopf abgewandt ist, soll das Verbindungselement an dem Halteelement befestigt sein und dabei bevorzugt an diesem anliegen. Über das Verbindungselement sind insoweit vorzugsweise unmittelbar benachbarte Lamellen miteinander verbunden, wobei das Verbindungselement an dem Lamellenkopf einer der Lamellen und dem der anderen der Lamellen zugeordneten Halteelement anliegt. Insoweit ist die entsprechende Lamelle beziehungsweise das Lamellenelement zuverlässig befestigt.

Es kann weiterhin vorgesehen sein, dass die Lichtabsorptionskammer im Querschnitt gesehen von dem Halteelement und dem Verbindungselement begrenzt ist. Insoweit schließen das Halteelement und das Verbindungselement die Lichtabsorptionskammer wenigstens bereichsweise zwischen sich ein. Das bedeutet, dass das Halteelement zumindest bereichsweise von dem Verbindungselement beabstandet angeordnet ist, um die Lichtabsorptionskammer auszubilden.

Schließlich kann vorgesehen sein, dass eine der Lichtabsorptionskammer und/oder dem Zwischenraum zugewandte Oberfläche des Verbindungselements derart gekrümmt ist, dass auf sie auftreffendes Licht in Richtung der Lichtabsorptionskammer reflektiert wird. Dies soll zumindest der Fall sein, wenn das Licht beziehungsweise der entsprechende Lichtstrahl von einer Position ausgeht, welche oberhalb einer Betrachtungsposition des Betrachters liegt. Weil jedoch in dem Fahrzeuginnenraum das Licht üblicherweise von oben auf die Blende gelangt, kann mit einer Lichtabsorptionskammer, welche die jeweils untere Lamelle hintergreift, ein sehr zuverlässiges Unterbinden von Glanzlichtern erfolgen.

Vorzugsweise ist im Querschnitt gesehen das Verbindungselement ausgehend von einem ersten Punkt, an welchem es an einer ersten der Lamelle anliegt, bis hin zu einem zweiten Punkt, an welchem es an einer zweiten, zu der ersten Lamelle unmittelbar benachbarten Lamelle anliegt, durchgehend gekrümmt. Die Krümmung liegt dabei insbesondere für eine der Lichtabsorptionskammer zugewandte Wand beziehungsweise Oberfläche des Verbindungselements vor. Der Krümmungsgrad der Krümmung kann dabei von dem ersten Punkt bis zu dem zweiten Punkt konstant sein oder - bevorzugt - sich stets verändern. Mit letzterer Ausführungsform wird das Licht besonders effektiv in der Lichtabsorptionskammer gehalten.

Die Erfindung betrifft weiterhin eine Lüftungsanordnung für ein Kraftfahrzeug, mit einem Lüftungsauslass, der mehrere Lüftungslamellen aufweist und einer benachbart zu dem Lüftungsauslass angeordneten Blende, insbesondere gemäß den vorstehenden Ausführungen, mit mehreren Lamellen, die an einem Tragteil der Blende befestigt sind. Dabei ist vorgesehen, dass wenigstens eine der Lamellen auf einer dem Tragteil zugewandten Seite von einer Lichtabsorptionskammer zumindest bereichsweise hintergriffen ist. Auf die Lüftungsanordnung wurde eingangs bereits eingegangen. Sie verfügt insbesondere über den Lüftungsauslass oder mehrere Lüftungsauslässe. Benachbart zu dem Lüftungsauslass beziehungsweise den Lüftungsauslässen ist die Blende angeordnet. Vorzugsweise schließt sich die Blende unmittelbar an den Lüftungsauslass an. Auf die Vorteile einer derartigen Ausgestaltung der Lüftungsanordnung sowie der Blende wurde bereits eingegangen. Die Lüftungsanordnung sowie die Blende können gemäß den vorstehenden Ausführungen weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt die einzige

Figur eine schematische Querschnittsdarstellung einer Blende für einen Fahrzeuginnenraum.

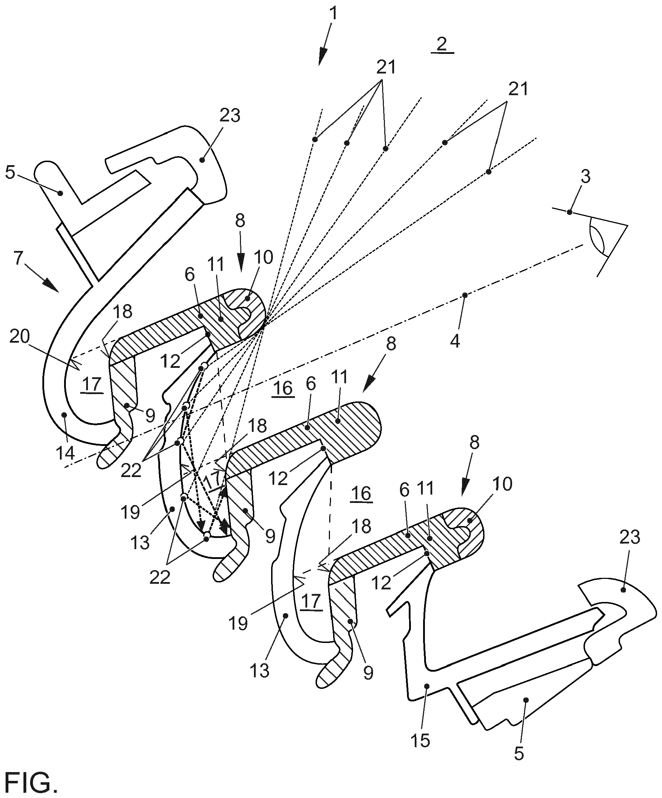

Die Figur 1 zeigt eine schematische Querschnittsdarstellung einer Blende 1 für einen Fahrzeuginnenraum 2, in welchem eine Betrachterposition 3 sowie ein von dieser ausgehender Sichtstrahl 4 auf die Blende 1 angedeutet sind. Die Betrachterposition 3 ist hierfür einen 95 %-Mann dargestellt. Eine solche Betrachterposition 3 liegt für Personen vor, die größer als 95 % aller durchschnittlicher angenommener Betrachter, insbesondere Autofahrer, sind.

Die Blende 1 dient insbesondere zum Verkleiden wenigstens eines Strukturelements 5, was hier lediglich beispielhaft angedeutet ist. Die Blende 1 verfügt über mehrere Lamellen 6, welche mittels eines Tragteils 7 der Blende 1 befestigt sind, insbesondere aneinander und/oder an dem wenigstens einen Strukturelement 5. Die Lamellen 6 sind vorzugsweise jeweils Bestandteil eines Lamellenelements 8, welches neben der entsprechenden Lamelle 6 ein Halteelement 9 aufweist. Dieses Halteelement 9 liegt hier in Gestalt eines Haltefußes vor und ist gegenüber der Lamelle angewinkelt, liegt also unter einem Winkel von größer als 0° und kleiner als 180° zu dieser vor.

Dem Lamellenelement 8 kann zudem ein Zierteil 10 zugeordnet sein, welches an der entsprechenden Lamelle 6 befestigt ist. Beispielsweise verfügt jedes der Lamellenelement 8 über ein derartiges Zierteil 10. In dem hier dargestellten Ausführungsbeispiel ist dies jedoch nur für einen Teil der Lamellenelemente 8 der Fall. Das Zierteil 10 kann beispielsweise aus einem Material bestehen, welches von dem Material des Lamellenelements 8 beziehungsweise der Lamelle 6 verschieden ist. Beispielsweise besteht das Lamellenelement 8 aus Kunststoff, während das Zierteil 10 aus Metall besteht oder zumindest eine Metalloptik aufweist.

Die Lamellen 6 sind parallel zueinander angeordnet. Sie weisen jeweils einen Lamellenkopf 11 auf, welcher auf der dem Fahrzeuginnenraum 2 zugewandten Seite der Lamelle 6 durch eine Abstufung 12 ausgebildet ist. Unter der Abstufung 12 ist beispielsweise die Ausbildung einer Stufe oder einer Ausklinkung zu verstehen. Die Lamellen 6 beziehungsweise die Lamellenelemente 8 sind über Verbindungselemente 13 miteinander verbunden. Jedes der Verbindungselemente 13 liegt dabei an dem Lamellenkopf 11, beispielsweise der Abstufung 12, einerseits sowie dem Halteelement 9 der unmittelbar benachbarten Lamelle 6 andererseits an beziehungsweise ist dort befestigt. Die Verbindungselemente 13 dienen insoweit dem Verbinden unmittelbar benachbarter Lamellen 6 beziehungsweise unmittelbar benachbarter Lamellenelemente 8. Die jeweils zuäußerst angeordneten Lamellen 6 beziehungsweise Lamellenelemente 8 können auf andere Art und Weise, beispielsweise mittels Elementen 14 und 15 des Tragteils 7 befestigt sein. Die Elemente 14 und 15 können dabei analog zu den Verbindungselementen 13 ausgebildet sein.

Es wird deutlich, dass jeweils unmittelbar benachbarte Lamellen 6 zwischen sich einen Zwischenraum 16 einschließen. Die Blende 1 ist nun derart ausgeführt, dass störende Lichtreflektionen und Glanzlichter zumindest teilweise, insbesondere vollständig, unterbunden werden. Zu diesem Zweck wird wenigstens eine der Lamellen 6, vorzugsweise jedoch alle Lamellen 6 jeweils von einer Lichtabsorptionskammer 17 hintergriffen. Das bedeutet, dass die Lichtabsorptionskammer 17 vorzugweise auf der dem Fahrzeuginnenraum 2 abgewandten Seite der jeweiligen Lamelle 6 beziehungsweise einer jeweiligen Stirnseite 18 der Lamelle 6 in Form eines Hohlraums vorliegt.

Die Lichtabsorptionskammer 17 wird vorzugsweise von dem Halteelement 9, dem Verbindungselement 13 und/oder der Lamelle 6, insbesondere der Stirnseite 18 der Lamelle 6, gemeinsam begrenzt. Die Lichtabsorptionskammer 17 schließt sich dabei besonders bevorzugt an den Zwischenraum 16 an beziehungsweise ist mit diesem strömungsverbunden. Es wird deutlich, dass die Lichtabsorptionskammer 17 in dem hier dargestellten Ausführungsbeispiel stets eine untere von unmittelbar benachbarten Lamellen 6 hintergreift. Bei einer derartigen Ausgestaltung der Blende 1 kann Licht, welches von oberhalb der Betrachterposition 3 in den Zwischenraum 16 einfällt, derart von den Lamellen 6 beziehungsweise den Lamellenelementen 8 und dem Verbindungselement 13 reflektiert werden, dass es in die Lichtabsorptionskammer 17 gelangt. Die Lichtabsorptionskammer 17 dient insoweit als Lichtfalle, aus welcher das Licht nicht oder lediglich mit stark abgeschwächter Intensität herausgelangen kann. Auf diese Art und Weise werden störende Reflektionen und Glanzlichter auf der Blende 1 unterbunden.

Es wird zudem deutlich, dass eine Oberfläche 19 des Verbindungselements 13 beziehungsweise eine Oberfläche 20 des Elements 14 gekrümmt verläuft. Die Krümmung der Oberfläche 19 und/oder der Oberfläche 20 ist im Querschnitt gesehen vorzugsweise konkav, weicht also gegenüber dem Fahrzeuginnenraum 2 zurück, sodass die Lichtabsorptionskammer 17 ausgebildet ist.

Die Krümmung ist dabei derart gewählt, dass auf die Oberfläche 19 beziehungsweise 20 auftreffendes Licht in Richtung der Lichtabsorptionskammer 17 reflektiert wird. In der Figur ist dies beispielhaft für Lichtstrahlen 21 dargestellt, welche oberhalb der Betrachterposition 3 beziehungsweise des Sichtstrahls 4 beginnen und in den Zwischenraum 16 gelangen. Die Lichtstrahlen 21 treffen an Reflektionspunkten 22 auf die Oberfläche 19 auf und werden in Richtung der Lichtabsorptionskammer 17 beziehungsweise in diese hinein reflektiert. In der Figur ist zudem erkennbar, dass ein Übergang zwischen den Strukturelementen 5 und den Elementen 14 und 15 mittels Abdeckelementen 23 optisch ansprechend gestaltet werden können. Vorzugsweise ist es vorgesehen, dass die Oberflächen 19 und 20 wenigstens bereichsweise, insbesondere vollständig, mattiert sind. Auf diese Art und Weise kann das einfallende Licht weiter abgeschwächt werden.

## Patentansprüche

1. Blende (1) für einen Fahrzeuginnenraum (2), mit mehreren Lamellen (6), die an einem Tragteil (7) der Blende (1) befestigt sind, **dadurch gekennzeichnet, dass** wenigstens eine der Lamellen (6) auf einer dem Tragteil (7) zugewandten Seite (18) von einer Lichtabsorptionskammer (17) zumindest bereichsweise hintergriffen ist.

2. Blende nach dem vorhergehenden Anspruch, **dadurch gekennzeichnet, dass** die Lichtabsorptionskammer (17) von einem von benachbarten Lamellen (6) begrenzten Zwischenraum (16) ausgeht.

3. Blende nach Anspruch 2, **dadurch gekennzeichnet, dass** die benachbarten Lamellen (6) übereinander angeordnet sind und die Lichtabsorptionskammer (17) eine untere und/oder eine obere der Lamellen (6) hintergreift.

4. Blende nach einem der vorhergehenden Ansprüche, **dadurch gekennzeichnet, dass** wenigstens eine der Lamellen (6) an einem Lamellenelement (8) vorliegt, das ein bezüglich der Lamelle (6) angewinkeltes Halteelement (9) aufweist.

5. Blende nach einem der vorhergehenden Ansprüche, **dadurch gekennzeichnet, dass** wenigstens eine der Lamellen (6) an ihrem dem Tragteil (7) abgewandten Ende einen Lamellenkopf (11) aufweist, der durch eine Abstufung (12) der Lamelle (6) ausgebildet ist.

6. Blende nach Anspruch 5, **dadurch gekennzeichnet, dass** an dem Lamellenkopf (11), insbesondere an der Abstufung (12), ein Verbindungselement (13) des Tragteils (7) befestigt ist.

7. Blende nach Anspruch 6 in Kombination mit Anspruch 4, **dadurch gekennzeichnet, dass** das Verbindungselement (13) an seinem dem Lamellenkopf (11) abgewandten Ende an dem Halteelement (9) befestigt ist.

8. Blende nach Anspruch 6 oder 7 in Kombination mit Anspruch 4, **dadurch gekennzeichnet, dass** die Lichtabsorptionskammer (17) im Querschnitt gesehen von dem Halteelement (9) und dem Verbindungselement (13) begrenzt ist.

9. Blende nach Anspruch 6 oder 7 oder 8, **dadurch gekennzeichnet, dass** eine der Lichtabsorptionskammer (17) und/oder dem Zwischenraum (16) zugewandte Oberfläche (19) des Verbindungselements (13) derart gekrümmt ist, dass auf sie auftreffendes Licht in Richtung der Lichtabsorptionskammer (17) reflektiert wird.

10. Lüftungsanordnung für ein Kraftfahrzeug, mit einem Lüftungsauslass, der mehrere Lüftungslamellen aufweist, und einer benachbart zu dem Lüftungsauslass angeordneten Blende (1) mit mehreren Lamellen (6), die an einem Tragteil (7) der Blende (1) befestigt sind, **dadurch gekennzeichnet, dass** wenigstens eine der Lamellen (6) auf einer dem Tragteil (7) zugewandten Seite (18) von einer Lichtabsorptionskammer (17) zumindest bereichsweise hintergriffen ist.

11. Lüftungsanordnung nach Anspruch 10, mit einer Blende (1) nach einem oder mehreren der Ansprüche 1 bis 9.

## Claims

1. A panel (1) for a vehicle interior (2), having a plurality of lamellas (6), which are fastened to a support part (7) of the panel (1), **characterized in that** at least one of the lamellas (6) is engaged from behind in at least some sections by a light absorption chamber (17) on a side (18) facing the support part (7).

2. The panel according to the preceding claim, **characterized in that** the light absorption chamber (17) extends from an intermediate space (16) limited by adjacent lamellas (6).

3. The panel according to Claim 2, **characterized in that** the adjacent lamellas (6) are arranged above one another and the light absorption chamber (17) engages from behind a lower and/or an upper one of the lamellas (6).

4. The panel according to any one of the preceding claims, **characterized in that** at least one of the lamellas (6) is present on a lamella element (8), which has a holding element (9) angled with respect to the lamella (6).

5. The panel according to any one of the preceding claims, **characterized in that** at least one of the lamellas (6) has a lamella head (11) on its end facing away from the support part (7), which lamella head (11) is formed by a stepped portion (12) of the lamella (6).

6. The panel according to Claim 5, **characterized in that** a connecting element (13) of the support part (7) is fastened to the lamella head (11), in particular to the stepped portion (12).

7. The panel according to Claim 6 in combination with Claim 4, **characterized in that** the connecting element (13) is fastened to the holding element (9) on its end facing away from the lamella head (11).

8. The panel according to Claim 6 or 7 in combination with Claim 4, **characterized in that** the light absorption chamber (17) when viewed in cross section is limited by the holding element (9) and the connecting element (13).

9. The panel according to Claim 6 or 7 or 8, **characterized in that** a surface (19) of the connecting element (13) facing the light absorption chamber (17) and/or the intermediate space (16) is curved in such a manner that light impinging on said surface (19) is reflected in the direction of the light absorption chamber (17).

10. A ventilation arrangement for a motor vehicle, having a ventilation outlet, which has a plurality of ventilation lamellas, and a panel (1) arranged adjacent to the ventilation outlet having a plurality of lamellas (6), which are fastened to a support part (7) of the panel (1), **characterized in that** at least one of the lamellas (6) is engaged from behind in at least some sections by a light absorption chamber (17) on a side (18) facing the support part (7).

11. The ventilation arrangement according to Claim 10, having a panel (1) according to any one or several of Claims 1 to 9.

## Revendications

1. Panneau (1) pour un habitacle de véhicule (2), avec plusieurs lamelles (6) qui sont fixées à une partie de support (7) du panneau (1), **caractérisé en ce qu'**au moins une des lamelles (6) est agrippée par-derrière, au moins à certains endroits, sur un côté (18) orienté vers la partie de support (7), par une chambre d'absorption de lumière (17).

2. Panneau (1) selon la revendication précédente, **caractérisé en ce que** la chambre d'absorption de lumière (17) part d'un espace intermédiaire (16) délimité par des lamelles (6) adjacentes.

3. Panneau (1) selon la revendication 2, **caractérisé en ce que** les lamelles (6) adjacentes sont superposées et la chambre d'absorption de lumière (17) s'accroche par-derrière une lamelle (6) inférieure et/ou supérieure.

4. Panneau (1) selon l'une des revendications précédentes, **caractérisé en ce qu'**au moins une des lamelles (6) se trouve sur un élément de lamelle (8) qui comprend un élément de maintien (9) incliné par rapport à la lamelle (6).

5. Panneau (1) selon l'une des revendications précédentes, **caractérisé en ce qu'**au moins une des lamelles (6) comprend, à son extrémité opposée à la partie de support (7), une tête de lamelle (11) qui est réalisée par un épaulement (12) de la lamelle (6).

6. Panneau (1) selon la revendication 5, **caractérisé en ce que**, sur la tête de lamelle (11), plus particulièrement sur l'épaulement (12), est fixé un élément de liaison (13) de la partie de support (7).

7. Panneau selon la revendication 6 en combinaison avec la revendication 4, **caractérisé en ce que** l'élément de liaison (13) est fixé, au niveau de son extrémité opposée à la tête de lamelle (11), à l'élément de maintien (9).

8. Panneau selon la revendication 6 ou 7 en combinaison avec la revendication 4, **caractérisé en ce que** la chambre d'absorption de lumière (17), vue en section transversale, est délimitée par l'élément de maintien (9) et l'élément de liaison (13).

9. Panneau selon la revendication 6 ou 7 ou 8, **caractérisé en ce qu'**une surface (19), orientée vers la chambre d'absorption de lumière (17) et/ou l'espace intermédiaire (16), de l'élément de liaison (13) est incurvée de façon à ce qu'elle réfléchisse la lumière incidente en direction de la chambre d'absorption de lumière (17).

10. Dispositif de ventilation pour un véhicule automobile, avec une sortie de ventilation qui comprend plusieurs lamelles de ventilation, et un panneau (1) disposé près de la sortie de ventilation, avec plusieurs lamelles (6) qui sont fixées à une partie de support (7) du panneau (1), **caractérisé en ce qu'**au moins une des lamelles (6) est agrippée par-derrière, au moins à certains endroits, sur un côté (18) orienté vers la partie de support (7), par une chambre d'absorption de lumière (17).

11. Dispositif de ventilation selon la revendication 10, avec un panneau (1) selon l'une ou plusieurs des revendications 1 à 9.
